# EUROPÄISCHE PATENTSCHRIFT

(11) **EP 1 929 704 B1**
(45) Veröffentlichungstag und Bekanntmachung des Hinweises auf die Patenterteilung: **12.10.2011**
(21) Anmeldenummer: 06792780.6
(22) Anmeldetag: 11.08.2006
(51) Int. Cl.: H04L 12/24, G08B 29/12

(54) **SYSTEM ZUR DATENÜBERTRAGUNG ZWISCHEN EINER MASCHINE UND/ODER ANLAGE UND EINER SERVICEEINHEIT**
SYSTEM FOR DATA TRANSMISSION BETWEEN A MACHINE AND/OR INSTALLATION AND A SERVICE UNIT
SYSTEME POUR LA TRANSMISSION DE DONNEES ENTRE UNE MACHINE ET/OU UNE INSTALLATION ET UNE UNITE D'ENTRETIEN

(30) Priorität: 19.09.2005 DE 102005044649
(43) Veröffentlichungstag der Anmeldung: 11.06.2008
(73) Patentinhaber: SIEMENS AKTIENGESELLSCHAFT, 80333 München (DE)
(72) Erfinder: GOSE, Horst, 91056 Erlangen (DE)
(86) Internationale Anmeldenummer: PCT/EP2006/065243
(87) Internationale Veröffentlichungsnummer: WO 2007/033868

(56) Entgegenhaltungen:
- EP-A2- 0 880 119
- WO-A-03/073339
- DE-A1- 10 042 914
- US-A1- 2004 098 167
- US-A1- 2004 190 916
- US-B1- 6 330 499

## Beschreibung

Die Erfindung betrifft eine Maschine und/oder Anlage sowie eine Service einheit. Die Maschine kann dabei z.B. als Werkzeugmaschine, Produktionsmaschine und/oder als Roboter ausgebildet sein.

Bei einer solchen Maschine ist ein guter und schneller Service bei auftretenden Problemen oder Servicefällen an der Maschine nur auf der Basis einer authentischen genauen Beschreibung der Symptome und der exakten Daten der Maschine möglich. Insbesondere bei Auftreten eines akuten Problems vor Ort an der Maschine ist oftmals entsprechend geschultes Personal oder ein Fachmann des Herstellers nicht vor Ort. Bisher wurde bei einem solchen Fall z.B. durch eine telefonische (oder andere personell veranlasste Kommunikation) Kommunikation dem Fachmann versucht möglichst viele Informationen, wie z.B. eine Problem-, Orts- und Maschinenbeschreibung, die er für die Lösung des Problems benötigt, zu übermitteln. Die Information, die der Fachmann dabei zur Lösung des Problems benötigt, müssen unbedingt authentisch sein, d.h. sie müssen mit den Gegebenheiten vor Ort an der Maschine übereinstimmen. Insbesondere aber das Problem der authentischen Maschinenbeschreibung erfordert wegen der Komplexität der Maschinendaten geschultes, in der Regel vor Ort an der Maschine nicht verfügbares Personal. Dies hat zur Folge, dass der Fachmann der sich z.B. auf einem anderen Kontinent befinden kann, das Problem nicht oder nur nach vielen Rückfragen lösen kann.

Der Erfindung liegt die Aufgabe zugrunde, das weltweite Übertragen von Daten einer Maschine und/oder Anlage zu ermöglichen.

Diese Aufgabe wird gelöst, durch eine Maschine und/oder Anlage, wobei die Maschine und/oder Anlage eine Steuereinrichtung und eine Mobilfunkeinheit aufweist, wobei die Steuereinrichtung mit einer Mobilfunkeinheit zum Übermitteln von Daten verbunden ist, wobei die Mobilfunkeinheit derart ausgebildet ist, dass sie über eine ihr zugeordnete Telefonnummer von einer Serviceeinheit anwählbar ist und die Daten über ein Mobilfunksystem an die Serviceeinheit übertragbar sind.

Weiterhin wird diese Aufgabe gelöst durch eine Serviceeinheit, wobei die Serviceeinheit eine Recheneinrichtung und eine Kommunikationseinheit aufweist, wobei die Recheneinrichtung mit der Kommunikationseinheit zum Übermitteln von Daten verbunden ist, wobei die Kommunikationseinheit derart ausgebildet ist, dass von ihr über eine Telefonnummer eine Mobilfunkeinheit einer Maschine und/oder Anlage nach einem der Ansprüche 1 bis 10 anwählbar ist und Daten über ein Mobilfunksystem von der Maschine und/oder Anlage an die Serviceeinheit übertragbar sind.

Eine erste vorteilhafte Ausbildung der Erfindung ist dadurch gekennzeichnet, dass die Serviceeinheit über eine ihr zugeordnete Telefonnummer von der Mobilfunkeinheit anwählbar ist. Hierdurch wird z.B. im Problemfall ein automatisches Anwählen der Serviceeinheit von der Maschine und/oder Anlage ermöglicht.

Weiterhin erweist es sich als vorteilhaft, wenn als Daten Trace-Daten, Fertigungsdaten, Nutzungsdaten, Softwaredaten, Systemdaten, Identifikationsdaten und/oder Daten einer Hardwarekomponente der Maschine und/oder Anlage vorgesehen sind. Die oben genannten Daten erlauben dem Fachmann das Problem schnell und zuverlässig zu analysieren und anschließend dem Bediener vor Ort Vorschläge zur Lösung des Problems zu unterbreiten.

Ferner erweist es sich als vorteilhaft, wenn die Hardwarekomponente der Maschine und/oder Anlage mittels eines RFID-Chips gekennzeichnet ist und die Daten der Hardwarekomponente der Maschine und/oder Anlage mittels des RFID-Chips ermittelt werden. Hierdurch wird eine automatische authentische Identifizierung der Hardwarekomponenten der Maschine und/oder Anlage ermöglicht.

Weiterhin erweist es sich als vorteilhaft, wenn die Mobilfunkeinheit als Handy oder Handymodul ausgebildet ist. Der Einsatz eines Handys oder Handymoduls als Mobilfunkeinheit erlaubt eine besonders kostengünstige Realisierung der Erfindung.

Ferner erweist es sich als vorteilhaft, wenn das Mobilfunksystem als mittels Bodenstationen gestütztes Mobilfunksystem ausgebildet ist. Mit Hilfe eines bodengestütztes Mobilfunksystems wird eine kostengünstige mobile Verbindung zur Maschine und/oder Anlage ermöglicht.

Weiterhin erweist es sich als vorteilhaft, wenn mittels des Mobilfunksystems die örtliche Position der Maschine und/oder Anlage bestimmbar ist. Hierdurch wird auf einfache Art und Weise eine örtliche Bestimmung der Position der Maschine und/oder Anlage ermöglicht.

Weiterhin erweist es sich als vorteilhaft, wenn die Maschine und/oder Anlage ein GPS-Empfänger aufweist, der Daten in Form von Positionsdaten des Aufstellungsorts der Maschine und/oder der Anlage ermittelt, wobei die Positionsdaten über das Mobilfunksystem an die Serviceeinheit übertragbar sind. Mit Hilfe eines GPS-Empfängers können die Positionsdaten des Aufstellungsorts der Maschine und/oder der Anlage hoch genau ermittelt werden und über das Mobilfunksystem an die Serviceeinheit übertragen werden.

Ferner erweist es sich als vorteilhaft, wenn das Mobilfunksystem als satellitengestütztes Mobilfunksystem ausgebildet ist. Mit Hilfe eines satellitengestützten Mobilfunksystems wird der Zugriff der Daten z.B. auch an dünn besiedelten Gebieten, die im Normalfall über kein bodengestütztes Mobilfunksystem verfügen, ermöglicht.

Ferner erweist es sich als vorteilhaft, wenn die Steuereinrichtung mit der Mobilfunkeinheit zum Übermitteln von Daten über einen Universal Serial Bus verbunden ist. Ein Universal Serial Bus stellt eine standardisierte Busverbindung dar.

Ferner erweist es sich als vorteilhaft, wenn Daten über das Mobilfunksystem an die Serviceeinheit verschlüsselt übertragbar sind. Hierdurch wird ein Erfassen der Daten durch nicht autorisierte Personen verhindert.

Die Maschine kann dabei z.B. als Werkzeugmaschine, Produktionsmaschine und/oder Roboter ausgebildet sein. Insbesondere bei diesen Arten von Maschinen ist eine Anwendung der Erfindung besonders vorteilhaft, da die oben aufgeführte Problematik bei diesen Maschinen häufig auftritt. Selbstverständlich kann die Erfindung jedoch auch auf anderen technischen Gebieten eingesetzt werden.

Weiterhin erweist es sich als vorteilhaft, wenn die Serviceeinheit über eine ihr zugeordnete Telefonnummer von der Mobilfunkeinheit anwählbar ist. Hierdurch wird z.B. im Problemfall ein automatisches Anwählen der Serviceeinheit von der Maschine und/oder Anlage ermöglicht.

Ferner erweist es sich als vorteilhaft, wenn die Kommunikati-onseinheit als Handy oder Handymodul ausgebildet ist. Der Einsatz eines Handys oder Handymodüls als Mobilfunkeinheit erlaubt eine besonders kostengünstige Realisierung der Erfindung.

Weiterhin erweist es sich als vorteilhaft, wenn das Mobilfunksystem als mittels Bodenstationen gestütztes Mobilfunksystem ausgebildet ist. Mit Hilfe eines bodengestütztes Mobilfunksystems wird eine kostengünstige mobile Verbindung zur Maschine und/oder Anlage, ermöglicht.

Weiterhin erweist es sich als vorteilhaft, wenn mittels des Mobilfunksystems die örtliche Position der Maschine und/oder Anlage bestimmbar ist und die Position an der Serviceeinheit anzeigt wird. Hierdurch wird auf einfache Art und Weise eine örtliche Bestimmung der Position der Maschine und/oder Anlage ermöglicht.

Ferner erweist es sich als vorteilhaft, wenn von einem GPS-Empfänger ermittelte Positionsdaten des Aufstellungsorts der Maschine und/oder Anlage über das Mobilfunksystem an die Service-Einheit übertragbar sind. Mit Hilfe eines GPS-Empfängers können die Positionsdaten des Aufstellungsorts der Maschine und/oder der Anlage hoch genau ermittelt werden und über das Mobilfunksystem an die Serviceeinheit übertragen werden.

Weiterhin erweist es sich als vorteilhaft, wenn die Recheneinrichtung mit der Kommunikationseinheit zum Übermitteln von Daten über einen Universal Serial Bus verbunden ist. Ein Universal Serial Bus stellt eine standardisierte Busverbindung dar.

Weiterhin erweist es sich als vorteilhaft, wenn die Recheneinrichtung als Laptop ausgebildet ist. Mit Hilfe eines Laptops kann z.B. ein Servicefachmann mobil an jedem Ort erreichbar sein und das Problem sofort lösen.

Weiterhin erweist es sich als vorteilhaft, wenn die Daten über das Mobilfunksystem von der Maschine und/oder Anlage an die Serviceeinheit verschlüsselt übertragbar sind. Hierdurch wird ein Erfassen der Daten durch nicht autorisierte Personen verhindert.

Weiterhin erweist sich ein Verfahren zum Übertragen von Daten zwischen einer Maschine und/oder Anlage und einer Serviceeinheit als vorteilhaft.

Vorteilhafte Ausgestaltungen der Maschine und/oder Anlage und/oder der Serviceeinheit ergeben sich analog zur vorteilhaften Ausgestaltung des Verfahrens und umgekehrt.

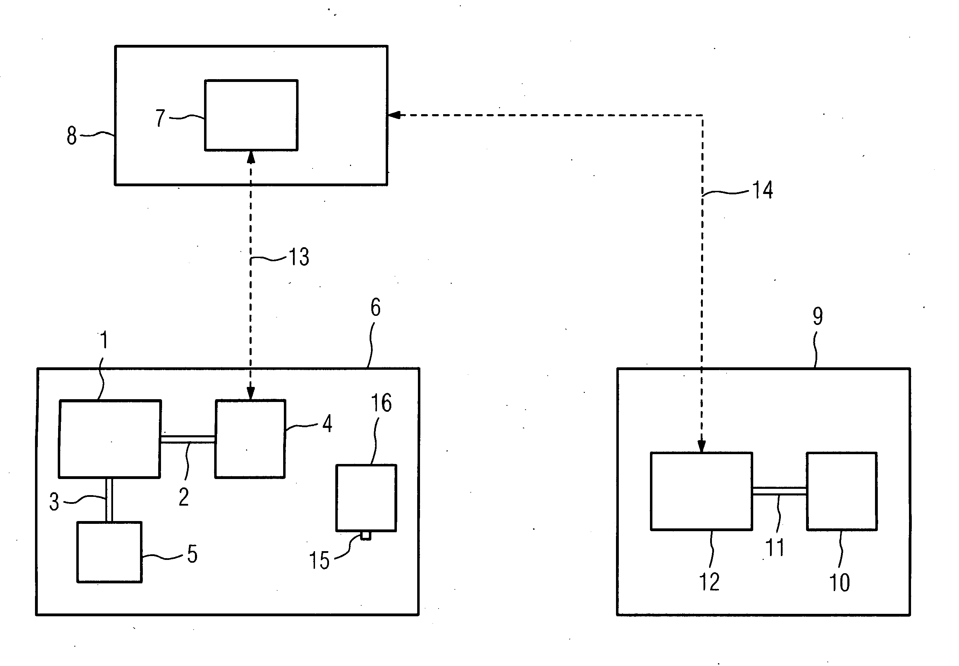

Ein Ausführungsbeispiel der Erfindung ist in der Zeichnung dargestellt und wird im Folgenden näher erläutert. Dabei zeigen
- FIG 1: System zur Datenübertragung zwischen einer Maschine und einer Serviceeinheit

In FIG 1 ist in Form eines Blockschaltbildes eine Übertragung von Daten von einer Maschine 6, über ein Mobilfunksystem 8, an eine Serviceeinheit 9, dargestellt. Die Maschine 6 weist eine Steuereinrichtung 1 zum Steuern der Maschine 6 auf. Die Steuereinrichtung 1 kann z.B. in Form einer numerischen Steuerung der Maschine 6 vorliegen. Die Steuereinrichtung 1 ist über einen Bus 2, der in dem Ausführungsbeispiel als Universal Serial Bus (USB) ausgeprägt ist, mit einer Mobilfunkeinheit 4, die im Rahmen des Ausführungsbeispiels als Handy ausgebildet ist, verbunden. Die Mobilfunkeinheit 4 kann aber auch als Handymodul, das lediglich die Wesentlichen für die Übertragung notwendigen Komponenten eines Handys aufweist, ausgebildet sein. Das Handymodul kann dabei z.B. in Form einer Einschubkarte vorliegen. Die Steuereinrichtung 1 ist weiterhin über eine Bus-Verbindung 3 mit einem GPS-Empfänger (Global Position System) verbunden. Weiterhin weist im Rahmen des Ausführungsbeispiels die Maschine 6 eine Hardwarekomponente 16 auf, an die ein RFID-Chip 15 (Radio Frequency Identifikation) angebracht ist. Selbstverständlich weist die Maschine 6 noch weitere Komponenten auf, die jedoch, da sie für das Verständnis der Erfindung unwesentlich sind, der Übersichtlichkeit halber, nicht dargestellt sind.

Die Mobilfunkeinheit 4 ist per Funk mit einer Bodenstation 7, die Bestandteil eines Mobilfunksystems 8 ist, zum Übermitteln von Daten verbunden, was durch einen gestrichelt gezeichneten Doppelpfeil 13 dargestellt ist. Das Mobilfunksystem 8 liegt im Rahmen des Ausführungsbeispiels in Form eines mittels Bodenstationen gestütztes Mobilfunksystem vor. Die Bodenstation 7 liegt im Rahmen des Ausführungsbeispiels in Form eines Sende- und Empfangsmasts vor. Das Mobilsystem 8 kann z.B. in Form eines Global Systems Mobil Netzes (GSM) oder eines Universal Mobil Telecommunications System (UMTS) ausgebildet sein. Das Mobilsystem 8 ist per Funk zum Austausch von Daten mit einer Serviceeinheit 9, insbesondere eine Kommunikationseinheit 12, die in dem Ausführungsbeispiel als Handymodul ausgebildet ist, zum Austausch der Daten verbunden. Dies ist durch einen gestrichelt gezeichneten Doppelpfeil 14 dargestellt. Die Kommunikationseinheit 12 kann aber auch als Festnetzanschluss ausgebildet sein. In diesem Fall stellt die Verbindung 14 eine Festnetzverbindung dar. Physikalisch gesehen wird also in diesem Fall die Verbindung zum Mobilfunksystem 8 über ein Festnetz hergestellt.

Die Serviceeinheit 9 weist eine Recheneinrichtung 10 auf, die über eine Busverbindung 11, die in dem Ausführungsbeispiel als Universal Serial Bus Verbindung ausgebildet ist, mit der Kommunikationseinheit 12 verbunden ist. Die Serviceeinheit 9 kann z.B. in Form einer Servicezentrale vorliegen. Sie kann aber auch mobil sein, in dem z.B. die Recheneinrichtung 10 als Laptop ausgebildet ist. Die Serviceeinheit 9 kann dabei weit entfernt, z.B. auf einem anderen Kontinent stehen als die Maschine 6. Der Mobilfunkeinheit 4 und der Kommunikationseinheit 12 ist jeweils eine Telefonnummer zugeordnet, über die die jeweilige Einheit anwählbar ist.

Im Falle eines Fehlers oder Problems an der Maschine 6 wird z.B. ein Fachmann des Herstellers der Maschine 6 über das Auftreten des Fehlers von z.B. dem Bediener der Maschine per Telefon informiert. Mit Hilfe der Serviceeinheit 9 kann nun der Fachmann auf die Daten der Maschine 6 zugreifen. Hierzu wird von der der Kommunikationseinheit 12 die Telefonnummer der Mobilfunkeinheit 4 angewählt und solchermaßen eine Verbindung zwischen der Maschine 6 und der Serviceeinheit 9 hergestellt. Die Daten werden dann von der Steuereinrichtung 1 an die Recheneinrichtung 10 über das Mobilfunksystem 8 an die Recheneinrichtung 10 übertragen. Der Fachmann, der die Serviceeinheit 9 bedient, kann auf Grundlage der nun authentisch vorliegenden Daten der Gegebenheiten an der Maschine 6, eine Analyse des Fehlers vornehmen. Der Bediener 6 vor Ort braucht über die Maschine 6 somit keine technischen Details zu kennen. Die Daten sind authentisch, d.h. sie stimmen mit den real an der Maschine 6 vorhandenen Gegebenheiten überein. Als Daten können z.B. Trace-Daten, Fertigungsdaten, Nutzungsdaten, Softwaredaten, Systemdaten, Identifikationsdaten und/oder Daten von Hardwarekomponenten der Maschine übertragen werden. Bevor der Datentransfer von der Maschine 6 an die Serviceeinheit 9 eingeleitet wird, wird die Identität der Serviceeinheit 9 verifiziert. Gegebenenfalls können die Daten auch verschlüsselt übertragen werden. Insbesondere z.B. die Hardwarekomponenten, an die ein RFID-Chip angebracht ist, können dabei automatisch von der Steuerung 1 erkannt werden und deren Daten (z.B. Hardwaretyp) an die Serviceeinheit 9 übermittelt werden.

Es ist aber auch möglich, dass im Falle eines Fehlers an der Maschine 6 die Steuereinrichtung 1 den Fehler automatisch erkennt und die Mobilfunkeinheit 4 automatisch eine der Kommunikationseinheit 12 zugeordnete Telefonnummer anwählt und solchermaßen eine Verbindung zwischen der Steuereinrichtung 1 und der Recheneinrichtung 10 herstellt. Die Daten können dann automatisiert übertragen werden und auf der Recheneinrichtung 10 gespeichert werden und die Serviceeinheit 9 informiert, z.B. durch Piepsen oder eine Anzeige den Fachmann, dass ein Störfall an der Maschine 6 vorliegt.

Neben den schon oben genannten Daten ist es für die Problembeseitigung von großem Vorteil, wenn neben den oben genannten Daten auch die örtliche Position der Maschine 6 bestimmbar ist und an der Serviceeinheit 9 angezeigt wird. Somit kann der Fachmann genau feststellen, wo sich die Maschine 6 befindet.

Wenn das Mobilfunksystem als ein mittels Bodenstationen gestütztes Mobilfunksystem, wie im Ausführungsbeispiel, ausgebildet ist, dann ist mittels des Mobilfunksystems die örtliche Position der Maschine und/oder Anlage über die Kenntnis mit welcher Bodenstation 7 die Mobilfunkeinheit 4 kommuniziert, bestimmbar. Wird das Funksignal der Mobilfunkeinheit 4 von mehreren Bodenstationen 7 des Mobilfunksystems 8 empfangen, so kann die Genauigkeit der Positionsbestimmung der Maschine erhöht werden. Solche Dienste werden von Betreibern von Mobilfunksystemen angeboten.

Alternativ oder zusätzlich kann die örtliche Position der Maschine auch mittels des in die Maschine 6 integrierten GPS-Empfängers 5 ermittelt werden und die solchermaßen ermittelten Positionsdaten des Aufstellungsorts der Maschine über das Mobilfunksystem 8 an die Serviceeinheit 9 übertragen werden. Hierdurch wird eine hochgenau Ortung der Maschine 6 ermöglicht.

Das Mobilfunksystem 8 kann aber auch, nicht wie im Ausführungsbeispiel als mittels Bodenstation gestütztes Mobilfunksystem ausgebildet sein, sondern das Mobilfunksystem 8 kann auch als satellitengestütztes Mobilfunksystem ausgebildet sein. Bei dieser Ausbildung der Erfindung ist eine Ortung mittels der Bodenstation 7 nicht mehr möglich, jedoch kann nach wie vor die Position der Maschine 6 mittels des GPS-Empfängers 5 bestimmt werden und an die Serviceeinheit 9 übertragen werden.

Selbstverständlich ist es auch möglich, dass Daten wie z.B. ein Softwareupdate oder Parameter von der Serviceeinheit 9 zur Maschine 6 übertragen werden und dort gespeichert werden.

Im Rahmen der Erfindung ist als Anlage eine technische Anlage wie z.B. eine Produktionsanlage und/oder z.B. ein Kraftwerk zu verstehen.

Dadurch, dass z.B. mittels der Erfindung die örtliche Position der Maschine und/oder Anlage bestimmbar ist, können z.B. vom Hersteller der Maschine und/oder der Anlage gezielt die Standorte von Service-Stützpunkten und Ersatzteillagern optimiert werden.

Weiterhin kann mit Hilfe der Erfindung eine vorausschauende Wartung an der Maschine und/oder der Anlage durchgeführt werden indem z.B. mittels Trendanalysen die Daten der Maschine und/oder Anlage ausgewertet werden und dann zum notwendigen Zweitpunkt der Maschinen- und/oder Anlagenbetreiber vom Hersteller der Maschine und/oder der Anlage über in kürze notwendige Wartungsarbeiten informiert wird.

## Patentansprüche

1. Werkzeugmaschine, Produktionsmaschine und/oder als Roboter ausgebildete Maschine, wobei die Maschine eine Steuereinrichtung (1) und eine Mobilfunkeinheit (4) aufweist, wobei die Steuereinrichtung (1) mit einer Mobilfunkeinheit (4) zum Übermitteln von Daten verbunden ist, wobei die Mobilfunkeinheit (4) derart ausgebildet ist, dass sie über eine ihr zugeordnete Telefonnummer von einer Serviceeinheit (9) anwählbar ist und die Daten über ein Mobilfunksystem (8) an die Serviceeinheit (9) übertragbar sind, wobei das Mobilfunksystem (8) als mittels Bodenstationen (7) gestütztes Mobilfunksystem ausgebildet ist, wobei mittels des Mobilfunksystems (8) die örtliche Position der Maschine bestimmbar ist.

2. Werkzeugmaschine, Produktionsmaschine und/oder als Roboter ausgebildete Maschine nach Anspruch 1, **dadurch gekennzeichnet, dass** die Serviceeinheit (9) über eine ihr zugeordnete Telefonnummer von der Mobilfunkeinheit (4) anwählbar ist.

3. Werkzeugmaschine, Produktionsmaschine und/oder als Roboter ausgebildete Maschine nach einem der vorhergehenden Ansprüche, **dadurch gekennzeichnet,**
**dass** als Daten Trace-Daten, Fertigungsdaten, Nutzungsdaten, Softwaredaten, Systemdaten, Identifikationsdaten und/oder Daten einer Hardwarekomponente (16) der Maschine vorgesehen sind.

4. Werkzeugmaschine, Produktionsmaschine und/oder als Roboter ausgebildete Maschine nach Anspruch 3, **dadurch gekennzeichnet, dass** die Hardwarekompente (16) der Maschine mittels eines RFID-Chips (15) **gekennzeichnet** ist und die Daten der Hardwarekomponente (16) der Maschine mittels des RFID-Chips (15) ermittelt werden.

5. Werkzeugmaschine, Produktionsmaschine und/oder als Roboter ausgebildete Maschine nach einem der vorhergehenden Ansprüche, **dadurch gekennzeichnet,**
**dass** die Mobilfunkeinheit (4) als Handy oder Handymodul ausgebildet ist.

6. Werkzeugmaschine, Produktionsmaschine und/oder als Roboter ausgebildete Maschine nach einem der vorhergehenden Ansprüche, **dadurch gekennzeichnet,**
**dass** die Steuereinrichtung (1) mit der Mobilfunkeinheit (4) zum Übermitteln von Daten über einen Universal Serial Bus (2) verbunden ist.

7. Werkzeugmaschine, Produktionsmaschine und/oder als Roboter ausgebildete Maschine nach einem der vorhergehenden Ansprüche, **dadurch gekennzeichnet , dass** Daten über das Mobilfunksystem (8) an die Serviceeinheit (9) verschlüsselt übertragbar sind.

8. Serviceeinheit (9), wobei die Serviceeinheit (9) eine Recheneinrichtung (10) und eine Kommunikationseinheit (12) aufweist, wobei die Recheneinrichtung (10) mit der Kommunikationseinheit (12) zum Übermitteln von Daten verbunden ist, wobei die Kommunikationseinheit (12) derart ausgebildet ist, dass von ihr über eine Telefonnummer eine Mobilfunkeinheit (4) einer Werkzeugmaschine, Produktionsmaschine und/oder einer als Roboter ausgebildeten Maschine nach einem der Ansprüche 1 bis 7 anwählbar ist und Daten über ein Mobilfunksystem (4) von der Maschine an die Serviceeinheit (9) übertragbar sind, wobei das Mobilfunksystem als mittels Bodenstationen (7) gestütztes Mobilfunksystem (8) ausgebildet ist, wobei mittels des Mobilfunksystems (8) die örtliche Position der Maschine bestimmbar ist und die Position an der Serviceeinheit (9) angezeigt wird.

9. Serviceeinheit nach Anspruch 8, **dadurch gekennzeichnet, dass** die Serviceeinheit (9) über eine ihr zugeordneten Telefonnummer von der Mobilfunkeinheit (4) anwählbar ist.

10. Serviceeinheit nach einem der Ansprüche 8 oder 9, **dadurch gekennzeichnet, dass** die Kommunikationseinheit (12) als Handy oder Handymodul ausgebildet ist.

11. Serviceeinheit nach einem der Ansprüche 8 bis 10,
**dadurch gekennzeichnet , dass** die Recheneinrichtung (10) mit der Kommunikationseinheit (12) zum Übermitteln von Daten über einen Universal Serial Bus verbunden ist.

12. Serviceeinheit nach einem der Ansprüche 8 bis 11,
**dadurch gekennzeichnet , dass** die Recheneinrichtung (10) als Laptop ausgebildet ist.

13. Serviceeinheit nach einem der Ansprüche 8 bis 12,
**dadurch gekennzeichnet, dass** die Daten über das Mobilfunksystem (8) von der Maschine an die Serviceeinheit (9) verschlüsselt übertragbar sind.

## Claims

1. Machine tool, production machine and/or machine arranged as robot, wherein the machine has a control device (1) and a mobile radio unit (4), wherein the control device (1) is connected to a mobile radio unit (4) for transmitting data, wherein the mobile radio unit (4) is arranged in such a manner that it can be dialed by a service unit (9) via a telephone number allocated to it and the data can be transmitted to the service unit (9) via a mobile radio system (8), wherein the mobile radio system (8) is arranged as mobile radio system supported by means of ground stations (7), wherein the local position of the machine can be determined by means of the mobile radio system (8).

2. Machine tool, production machine and/or machine arranged as robot according to Claim 1, **characterized in that** the service unit (9) can be dialed by the mobile radio unit (4) via a telephone number allocated to it.

3. Machine tool, production machine and/or machine arranged as robot according to one of the preceding claims, **characterized in that** trace data, production data, usage data, software data, system data, identification data and/or data of a hardware component (16) of the machine are provided as data.

4. Machine tool, production machine and/or machine arranged as robot according to Claim 3, **characterized in that** the hardware component (16) of the machine is identified by means of an RFID chip (15) and the data of the hardware component (16) of the machine are determined by means of the RFID chip (15).

5. Machine tool, production machine and/or machine arranged as robot according to one of the preceding claims, **characterized in that** the mobile radio unit (4) is arranged as cell phone or cell phone module.

6. Machine tool, production machine and/or machine arranged as robot according to one of the preceding claims, **characterized in that** the control device (1) is connected to the mobile radio unit (4) via a universal serial bus (2) for transmitting data.

7. Machine tool, production machine and/or machine arranged as robot according to one of the preceding claims, **characterized in that** data can be transmitted encrypted to the service unit (9) via the mobile radio system (8).

8. Service unit (9), wherein the service unit (9) has a computing device (10) and a communication unit (12), wherein the computing device (10) is connected to the communication unit (12) for transmitting data, wherein the communication unit (12) is arranged in such a manner that it can dial a mobile radio unit (4) of a machine tool, production machine and/or machine arranged as robot according to one of Claims 1 to 7 via a telephone number and data can be transmitted to the service unit (9) from the machine via a mobile radio system (4), wherein the mobile radio system is arranged as mobile radio system (8) supported by means of ground stations (7), wherein the local position of the machine can be determined by means of the mobile radio system (8) and the position is indicated on the service unit (9).

9. Service unit according to Claim 8, **characterized in that** the service unit (9) can be dialed via the mobile radio unit (4) via a telephone number allocated to it.

10. Service unit according to one of Claims 8 or 9, **characterized in that** the communications unit (12) is arranged as cell phone or cell phone module.

11. Service unit according to one of Claims 8 to 10, **characterized in that** the computing device (10) is connected to the communications unit (12) via a universal serial bus for transmitting data.

12. Service unit according to one of Claims 8 to 11, **characterized in that** the computing device (10) is arranged as laptop.

13. Service unit according to one of Claims 8 to 12, **characterized in that** the data can be transmitted encrypted to the service unit (9) from the machine via the mobile radio system (8).

## Revendications

1. Machine-outil, machine de production et/ou machine constituée en robot, dans laquelle la machine comporte un dispositif ( 1 ) de commande et une unité ( 4 ) de téléphonie mobile, le dispositif ( 1 ) de commande étant relié à l'unité ( 4 ) de téléphonie mobile pour la transmission de données, l'unité ( 4 ) de téléphonie mobile étant constituée de manière à pouvoir être choisie par une unité ( 9 ) de service par l'intermédiaire de son numéro de téléphone associé et les données pouvant être transmises à l'unité ( 9 ) de service par l'intermédiaire d'un système (8) de téléphonie mobile, le système ( 8 ) de téléphonie mobile étant constitué en système de téléphonie mobile assisté au moyen de stations (7) au sol, dans laquelle la position dans l'espace de la machine peut être déterminée au moyen du système ( 8 ) de téléphonie mobile.

2. Machine-outil, machine de production et/ou machine constituée en robot suivant la revendication 1, **caractérisée en ce que** l'unité ( 9 ) de service peut être choisie par l'unité (4) de téléphonie mobile par l'intermédiaire d'un numéro de téléphone qui lui est associé.

3. Machine-outil, machine de production et/ou machine constituée en robot suivant l'une des revendications précédentes, **caractérisée en ce qu'**il est prévu comme données, des données-trace, des données de fabrication, des données d'utilisation, des données de logiciel, des données de système, des données d'identification et/ou des données d'un composant ( 16 ) matériel de la machine.

4. Machine-outil, machine de production et/ou machine constituée en robot suivant la revendication 3, **caractérisée en ce que** le composant (16) matériel de la machine est **caractérisé** au moyen d'une puce RFID ( 15 ) et les données du composant ( 16 ) matériel de la machine sont déterminées au moyen de la puce RFID ( 15 ).

5. Machine-outil, machine de production et/ou machine constituée en robot suivant l'une des revendications précédentes, **caractérisée en ce que** l'unité ( 4 ) de téléphonie mobile est constituée sous la forme d'un téléphone portable ou d'un module de téléphone portable.

6. Machine-outil, machine de production et/ou machine constituée en robot suivant l'une des revendications précédentes, **caractérisée en ce que** le dispositif (1) de commande est relié à l'unité ( 4 ) de téléphonie mobile pour la transmission de données par l'intermédiaire d'un bus ( 2 ) Universal Serial.

7. Machine-outil, machine de production et/ou machine constituée en robot suivant l'une des revendications précédentes, **caractérisée en ce que** des données peuvent être transmises de manière chiffrée à l'unité ( 9 ) de service par l'intermédiaire du système ( 8 ) de téléphonie mobile.

8. Unité ( 9 ) de service, l'unité ( 9 ) de service ayant un ordinateur ( 10 ) et une unité (12) de communication, l'ordinateur (10) étant relié à l'unité (12) de communication pour la transmission de données, l'unité ( 12 ) de communication étant constituée, de manière à ce que par elle, par l'intermédiaire d'un numéro de téléphone, une unité ( 4 ) de téléphonie mobile d'une machine-outil, d'une machine de production et/ou d'une machine constituée en robot, suivant l'une des revendications 1 à 7 puisse être choisie et de manière à ce que des données puissent être transmises de la machine à l'unité ( 9 ) de service par l'intermédiaire d'un système ( 4 ) de téléphonie mobile, le système de téléphonie mobile étant constitué sous la forme d'un système ( 8 ) de téléphonie mobile assisté par des stations ( 7 ) au sol, la position dans l'espace de la machine pouvant être déterminée au moyen du système ( 8 ) de téléphonie mobile et la position être indiquée à l'unité ( 9 ) de service.

9. Unité de service suivant la revendication 8, **caractérisée en ce que** l'unité ( 9 ) de service peut, par l'intermédiaire d'un numéro de téléphone qui lui est associé, être choisie par l'unité ( 4 ) de téléphonie mobile.

10. unité de service suivant l'une des revendications 8 ou 9, **caractérisée en ce que** l'unité (12) de communication est constituée sous la forme d'un téléphone portable ou d'un module de téléphone portable.

11. Unité de service suivant l'une des revendications 8 à 10, **caractérisée en ce que** l'ordinateur ( 10 ) peut être relié à l'unité (12) de communication pour la transmission de données par l'intermédiaire d'un bus Universal Serial.

12. Unité de service suivant l'une des revendications 8 à 11, **caractérisée en ce que** l'ordinateur ( 10 ) est constitué sous la forme d'un ordinateur portable.

13. Unité de service suivant l'une des revendications 8 à 12, **caractérisée en ce que** des données peuvent être transmises de manière chiffrée à l'unité ( 9 ) de service par l'intermédiaire du système ( 8 ) de téléphonie mobile.
